# EUROPEAN PATENT APPLICATION

(11) **EP 4 083 810 A1**
(43) Date of publication of application: **02.11.2022**
(21) Application number: 21798260.2
(22) Date of filing: 29.01.2021
(51) Int. Cl.: G06F 16/2455, G06F 16/2453

(54) **QUERY METHOD AND APPARATUS SUITABLE FOR OLAP QUERY ENGINE**

(30) Priority: 10.12.2020 CN 202011434001
(71) Applicant: KUYUN (SHANGHAI) INFORMATION TECHNOLOGY CO., LTD., Shanghai 200120 (CN)
(72) Inventor: LIU, Wennzheng, Shanghai 200120 (CN); LI, Dong, Shanghai 200120 (CN); LI, Yang, Shanghai 200120 (CN); HAN, Qing, Shanghai 200120 (CN)
(74) Representative: Dr. Gassner & Partner mbB
(86) International application number: PCT/CN2021/074309
(87) International publication number: WO 2022/121098

(57) **Abstract**

The disclosure provides a query method and device suitable for an On-Line Analytical Processing (OLAP) query engine. The device includes a client agent module, a query pattern matching module, a query distributed execution module, and a pre-aggregation module. The query pattern matching module is configured to obtain an MDX query request received by an OLAP query engine, and process the MDX query request to generate at least one set of aggregation query sets based on dimension. The one set of aggregation query sets includes a plurality of aggregation query requests. The query distributed execution module is configured to perform concurrent processing on the plurality of aggregation query requests based on the OLAP query engine to obtain a plurality of corresponding aggregation query results in a database. The aggregation query requests are arranged corresponding to the aggregation query results. Based on the method and device provided in the disclosure, an efficient OLAP query execution engine can be constructed, to deal with complex OLAP queries of various reporting system. Therefore, the execution efficiency of MDX query can be significantly enhanced, and analysis requests of the reporting systems are rapidly responded.

## Description

### Technical Field

The disclosure relates to data query technologies, and in particular, to a query method and device suitable for an On-Line Analytical Processing (OLAP) query engine.

### Background

Hot issues that an OLAP query system is concerned about all the time are how to enhance the execution efficiency of OLAP query and rapidly respond to reporting analysis requirements of services.

A common used query language of OLAP is MDX. Most reporting systems (including but not limited to Excel, Power BI, Tableau, MSTR, Smartbi, and so on) all support MDX interfaces.

At present, conventional OLAP engines supporting MDX in the industry include SSAS, Mondrian, and the like. When these conventional OLAP engines encounter situations that MDX query sent by a reporting system is complex, response performance may be severely reduced. There are three reasons. For the first reason, a data exchange format of an MDX interface is XMLA. The format has a low transmission data efficiency. Thus, in some cases of large query result sets, the transmission time of a query network may be very long. For the second reason, when the conventional OLAP engines perform MDX query, calculation is performed based on each MDX operator step by step, without considering the MDX query characteristics of the reporting system for optimization. For the third reason, the conventional OLAP engines perform MDX query by using single machines. Thus, under some cased of large query requests, slow execution and out of memory may occur.

In view of a problem that it is hard to rapidly respond query requests of a report form due to defects of MDX engine technologies in the prior art, effectively solutions have not been provided yet in the prior art.

### Summary

Based on the query method and device suitable for an OLAP query engine provided in embodiments of the disclosure, an efficient OLAP query execution engine can be constructed, to deal with complex OLAP queries of various reporting system. Therefore, the execution efficiency of MDX query can be significantly enhanced, and analysis requests of the reporting systems are rapidly responded.

On the first aspect of an embodiment of the disclosure, a query method suitable for an OLAP query engine is provided, and includes the following operations.

An MDX query request received by an OLAP query engine is obtained. The MDX query request is processed to generate at least one set of aggregation query sets based on dimension. One set of aggregation query sets includes a plurality of aggregation query requests.

Concurrent processing is performed on the plurality of aggregation query requests based on the OLAP query engine to obtain a plurality of corresponding query results in a database. The aggregation query requests are arranged corresponding to the query results.

Optionally, in a possible implementation of the first aspect, the operation of obtaining the MDX query request received by the OLAP query engine includes the following operation.

A format of the MDX query request is converted into any one or more of an JSON format and a Protobuf format from an XMLA.

Optionally, in a possible implementation of the first aspect, the operation before converting the format of the MDX query request into any one or more of the JSON format and the Protobuf format from an XMLA further includes the following operations.

Whether the value of the MDX query request is greater than a first preset value is determined.

If the value of the MDX query request packet is greater than the first preset, the format of the MDX query request is converted into any one or more of the JSON format and the Protobuf format from an XMLA.

Optionally, in a possible implementation of the first aspect, the operation after performing concurrent processing on the plurality of aggregation query requests based on the OLAP query engine to obtain a plurality of corresponding aggregation query results in a database further includes the following operation.

The plurality of aggregation query results are fed back to the OLAP query engine and a reporting system.

Optionally, in a possible implementation of the first aspect, service demand data is obtained, and includes dimension information.

Original detail data involved in a data warehouse is constructed into Cube corresponding to the dimension information according to the dimension information.

On the second aspect of an embodiment of the disclosure, a query device suitable for an OLAP query engine is provided, and includes a query pattern matching module and a query distributed execution module.

The query pattern matching module is configured to obtain an MDX query request received by an OLAP query engine, and process the MDX query request to generate at least one set of aggregation query sets based on dimension. The one set of aggregation query sets includes a plurality of aggregation query requests.

The query distributed execution module is configured to perform concurrent processing on the plurality of aggregation query requests based on the OLAP query engine to obtain a plurality of corresponding query results in a database. The aggregation query requests are arranged corresponding to the query results.

Optionally, in a possible implementation of the second aspect, the device further includes a client agent module. The client agent module is configured to convert a format of the MDX query request into any one or more of a JSON format and a Protobuf format from an XMLA.

Optionally, in a possible implementation of the second aspect, the client agent module is configured to determine whether the value of the MDX query request is greater than a first preset value.

If the value of the MDX query request packet is greater than the first preset, the format of the MDX query request is converted into any one or more of the JSON format and the Protobuf format from an XMLA.

Optionally, in a possible implementation of the second aspect, the device further includes a pre-aggregation module. The pre-aggregation module is configured to obtain service demand data. The service demand data includes dimension information.

Original detail data involved in a data warehouse is constructed into Cube corresponding to the dimension information according to the dimension information.

On the third aspect of an embodiment of the disclosure, a readable storage medium is provided. The readable storage medium stores a computer program. The method in the first aspect and various possible designs of the first aspect of the disclosure is implemented when the computer program is performed by a processor.

On the fourth aspect of an embodiment of the disclosure, a query method suitable for an OLAP query engine is provided. The method is performed on a server side, and includes the following operations.

A server receives an MDX query request sent by a terminal, and processes the MDX query request to generate at least one set of aggregation query sets based on dimension. One set of aggregation query sets includes a plurality of aggregation query requests.

The server performs concurrent processing on the plurality of aggregation query requests based on the OLAP query engine to obtain a plurality of corresponding query results in a database. The aggregation query requests are arranged corresponding to the query results.

The server obtains service demand data. The service demand data includes dimension information. Original detail data involved in a data warehouse is constructed into Cube corresponding to the dimension information according to the dimension information. The original detail data is the detail of the query results.

On the fifth aspect of an embodiment of the disclosure, a query method suitable for an OLAP query engine is provided. The method is performed on a terminal side, and includes the following operations.

A terminal converts a format of the MDX query request into any one or more of a JSON format and a Protobuf format from an XMLA to send to a server.

The server receives an MDX query request sent by a terminal, and processes the MDX query request to generate at least one set of aggregation query sets based on dimension. One set of aggregation query sets includes a plurality of aggregation query requests.

The server performs concurrent processing on the plurality of aggregation query requests based on the OLAP query engine to obtain a plurality of corresponding query results in a database. The aggregation query requests are arranged corresponding to the query results.

Optionally, in a possible implementation of the fifth aspect, the server is configured to obtain service demand data. The service demand data includes dimension information.

Original detail data involved in a data warehouse is constructed into Cube corresponding to the dimension information according to the dimension information. The original detail data is the detail of the query results.

On the sixth aspect of an embodiment of the disclosure, a query device suitable for an OLAP query engine is provided, and includes a query pattern matching module, a query distributed execution module, and a pre-aggregation module.

The query pattern matching module is configured to obtain an MDX query request received by an OLAP query engine, and process the MDX query request to generate at least one set of aggregation query sets based on dimension. The one set of aggregation query sets includes a plurality of aggregation query requests.

The query distributed execution module is configured to perform concurrent processing on the plurality of aggregation query requests based on the OLAP query engine to obtain a plurality of corresponding query results in a database. The aggregation query requests are arranged corresponding to the query results.

The pre-aggregation module is configured to perform concurrent processing on the plurality of aggregation query requests based on the OLAP query engine to obtain a plurality of corresponding query results in a database. The aggregation query requests are arranged corresponding to the query results.

On the seventh aspect of an embodiment of the disclosure, a query device suitable for an OLAP query engine is provided. The device is performed at a terminal and includes the following operations.

A format of the MDX query request is converted into any one or more of a JSON format and a Protobuf format from an XMLA to send to a server.

The server receives an MDX query request sent by a terminal, and processes the MDX query request to generate at least one set of aggregation query sets based on dimension. One set of aggregation query sets includes a plurality of aggregation query requests.

The server performs concurrent processing on the plurality of aggregation query requests based on the OLAP query engine to obtain a plurality of corresponding query results in a database. The aggregation query requests are arranged corresponding to the query results.

On the eighth aspect of an embodiment of the disclosure, a query system suitable for an OLAP query engine is provided. The system includes at least one terminal and at least one platform server.

The terminal is configured to convert a format of the MDX query request into any one or more of a JSON format and a Protobuf format from an XMLA to send to a server.

The platform server is configured to: receive an MDX query request sent by the terminal, and process the MDX query request to generate at least one set of aggregation query sets based on dimension, the one set of aggregation query sets including a plurality of aggregation query requests; perform concurrent processing on the plurality of aggregation query requests based on the OLAP query engine to obtain a plurality of corresponding query results in a database, the aggregation query requests being arranged corresponding to the query results; and obtain service demand data, the service demand data including dimension information, and construct original detail data involved in a data warehouse into Cube corresponding to the dimension information according to the dimension information, wherein the original detail data is the detail of the query results.

On the eighty aspect of an embodiment of the disclosure, an electronic device is provided. The electronic device includes at least one processor and a memorizer in communication connection with the at least one processor. The memorizer stores a computer program capable of being performed by the at least one processor. The computer program is performed by the at least one processor, to cause the at least one processor to perform the method in the first aspect, the fourth aspect and possible designs in the fifth aspect of the disclosure.

According to a query method and device suitable for an OLAP query engine provided in the disclosure, the MDX query request is processed to generate at least one set of aggregation query sets based on dimension. Concurrent processing is performed to obtain corresponding query results in a query process of the OLAP query engine. In the process, since the OLAP query engine controlled by the method generates the aggregation query sets based on dimensions prior to query data of a reporting system, concurrent processing is adopted when the aggregation query sets are queried. Therefore, compared with a traditional manner, it has higher efficiency.

In addition, the disclosure provides a performance optimization scheme of network transmission when the query results of the OLAP engine are large, so that the data volume of the network transmission between the reporting system and the OLAP engine is greatly reduced.

The disclosure provides an execution flow optimization scheme when the OLAP engine processes complex MDX query. By combining more MDX operators to perform operation, an operation flow is simplified, and the concurrency of MDX execution is enhanced.

The disclosure further provides a query optimization scheme when the OLAP engine processes large data volume. By combining the advantages of distributed computing and pre-computing, query performance is greatly enhanced.

### Brief Description of the Drawings

Fig. 1 is a flowchart of a first implementation of a query method suitable for an OLAP query engine.
Fig. 2 is a flowchart of a second implementation of a query method suitable for an OLAP query engine.
Fig. 3 is a flowchart of a third implementation of a query method suitable for an OLAP query engine.
Fig. 4 is a schematic structural diagram of a first implementation of a query device suitable for an OLAP query engine.
Fig. 5 is a schematic structural diagram of a second implementation of a query device suitable for an OLAP query engine.
Fig. 6 is a schematic structural diagram of a first implementation of a query system suitable for an OLAP query engine.

### Detailed Description of the Embodiments

In order to make objectives, technical solutions, and advantages of embodiments of the disclosure clearer, the technical solutions in the embodiments of the disclosure will be clearly and completely described below in combination with the drawings in the embodiments of the disclosure. It is apparent that the described embodiments are only part of the embodiments of the disclosure, not all the embodiments. Based on the embodiments in the disclosure, all other embodiments obtained by those of ordinary skilled in the art without creative work shall fall within the protection scope of the disclosure.

Terms "first", "second", "third", "fourth" and the like (if exists) in the description, claims and the above mentioned drawings of this application are used for distinguishing similar objects rather than describing a specific sequence or a precedence order. It should be understood that the data used in such a way may be exchanged where appropriate, in order that the embodiments of the disclosure described here can be implemented in an order other than those illustrated or described herein.

It should be understood that, in various embodiments of the disclosure, the sequence number of each process does not mean the sequence of execution. The execution sequence of each process should be determined by its functions and internal logic, which should not constitute any limitation on the implementation process of the embodiments of the disclosure.

It should be understood that, in the disclosure, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

It should be understood that, in the disclosure, the meaning of "multiple" is two or more. The term "and/or" is merely an association relationship describing related objects, which means that there may be three relationships, for example, A and/or B may indicate three cases: A exists alone, A and B exist simultaneously, and B exists alone. The character "/" in this paper generally indicates that the related objects are in an "or" relationship. "Including A, B and C", "including A, B, and C" means that all three of A, B, and C are included; "including A, B or C" means that one of A, B, and C is included; and "including A, B and/or C" means to include any one or any two or three of A, B, and C.

It should be understood that, in the disclosure, "B corresponding to A", "A corresponding to B", "A and B corresponds to each other" or "B and A corresponds to each other" indicates that B is associated with A, and B can be determined according to A. Determining B according to A does not mean that B is merely determined according to A, B may also be determined according to A and/or other information. The matching of A and B means that the similarity between A and B is greater than or equal to a preset threshold.

Depending on the context, "if" as used herein can be interpreted as "while" or "when" or "in response to determination" or "in response to detection".

The technical solutions of the disclosure are described below in detail by using specific embodiments. The following specific embodiments can be combined with each other, and the same or similar concepts or processes may not be repeated in some embodiments.

Term definition: OLAP refers to on-line analytical processing, which is a technology that an analyst can rapidly insight data from multiple dimensions; MDX refers to multi-dimensional expressions, and is usually used for OLAP query; Cube refers to a multi-dimensional data set; and XMLA refers to a data access protocol.

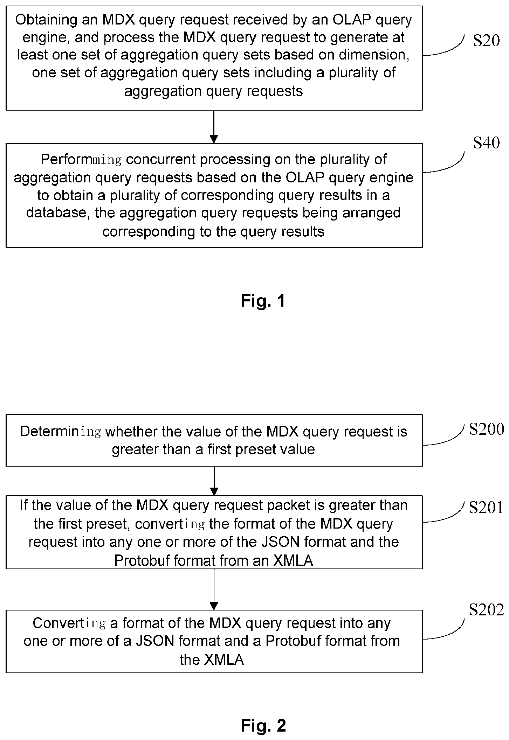

The disclosure provides a query method suitable for an OLAP query engine. As shown in Fig. 1, the method includes the following steps.

At S20, an MDX query request received by an OLAP query engine is obtained. The MDX query request is processed to generate at least one set of aggregation query sets based on dimension. One set of aggregation query sets includes a plurality of aggregation query requests.

At S20, MDX query received by an OLAP query engine is mainly analyzed, to generate an aggregation query plan suitable for reporting layout. Firstly, through pattern matching, reporting operation and layout elements included in MDX query are analyzed, such as the selection, sorting and filtering of dimension measures, the use of a report filter, drilling down of layers, subtotal and total, and so on. Then, the layout elements of each lower aggregation layer report are decomposed. Finally, a plan of a set of aggregation query sets is generated. Each plan includes to-be-obtained dimension measure information, filtering and sorting information, and the like.

This step can effectively optimize an execution process of the entire OLAP query engine, to combine and perform more MDX operators, so that the concurrency of MDX execution is enhanced.

At S40, concurrent processing is performed on the plurality of aggregation query requests based on the OLAP query engine to obtain a plurality of corresponding query results in a database. The aggregation query requests are arranged corresponding to the query results.

At S40, the plurality of aggregation query requests and plans are mainly performed in a distributed manner. Firstly, data information of a corresponding data source is found according to dimension measure information, that is, the query results (may be pre-aggregated Cube information, or may also be original table data in a data warehouse). Then, a query task is submitted to a distributed execution engine. The task includes loading the data in the data source into the distributed execution engine (the distributed execution engine includes but is not limited to Spark, MapReduce, etc.). Operation, such as filtering and sorting, and function operation of some MDX are performed in the distributed execution engine. The query results may be stored in the database in advance.

At S20, the operation of obtaining the MDX query request received by the OLAP query engine includes the following step.

At S202, a format of the MDX query request is converted into any one or more of a JSON format and a Protobuf format from an XMLA.

Before S202, as shown in Fig. 2, the step further includes the following steps.

At S200, whether the value of the MDX query request is greater than a first preset value is determined.

At S201, if the value of the MDX query request packet is greater than the first preset, the format of the MDX query request is converted into any one or more of the JSON format and the Protobuf format from an XMLA.

In S200, S201 and S202, the first preset value may be set in advance. The step is mainly used for OLAP query of an agent reporting system. Firstly, the data format of OLAP query is converted into a lighter and efficient data format (including but not limited to JSON, Protobuf, etc.) from the XMLA, and a compression algorithm is used to further reduce network data transmission volume. Then, the data format is interacted with the OLAP query engine. Finally, a data format of a result obtained from the OLAP query engine is converted into the XMLA, to return to a reporting system. Based on the above steps, network data transmission volume of an original reporting system and the OLAP query engine can be greatly reduced. When query result volume is small, this step can be saved.

After S40, the step further includes the following step.

At S50, the plurality of aggregation query results are fed back to the OLAP query engine and a reporting system.

Through S50, after the distributed execution engine performs operations according to the aggregation query plan, the query results are collected back to the OLAP query engine, and then are returned. This step mainly resolves a performance problem of large query request volume.

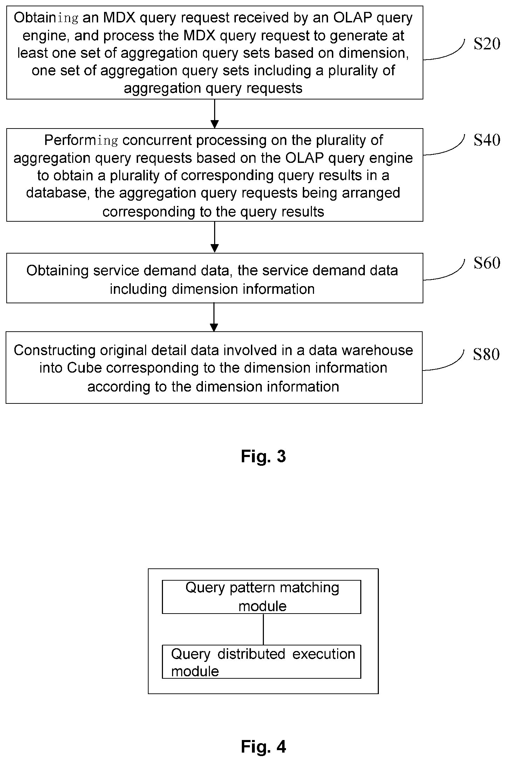

In an embodiment, as shown in Fig. 3, the following steps are further included.

At S60, service demand data is obtained, and the service demand data includes dimension information.

At S80, original detail data involved in a data warehouse is constructed into Cube corresponding to the dimension information according to the dimension information.

In S60 and S80, according to OLAP analysis requirements (which dimension measures need to be analyzed) of services, original detail data in a data warehouse is constructed into Cube, to provide aggregated data required by OLAP query. This step adopts an OLAP modeling tool (including but not limited to kylin, and the like) generally used in the industry, so that the query efficiency of aggregation query is mainly enhanced. It is to be noted that, this step is not a main process. When query request volume is small, this step can be saved.

The applicant takes Apache Kylin as the pre-aggregation module. The query performance of a conventional OLAP query engine and the query performance of the OLAP query engine constructed by this scheme under a conventional reporting system are tested. The OLAP query engine constructed by this scheme is 2-5 times faster than the conventional OLAP query engine under common query, and is 10-100 times faster than the conventional OLAP query engine under complex query.

The disclosure further provides a query device suitable for an OLAP query engine. As shown in Fig. 4, the device includes a query pattern matching module and a query distributed execution module.

The query pattern matching module is configured to obtain an MDX query request received by an OLAP query engine, and process the MDX query request to generate at least one set of aggregation query sets based on dimension. The one set of aggregation query sets includes a plurality of aggregation query requests.

The query distributed execution module is configured to perform concurrent processing on the plurality of aggregation query requests based on the OLAP query engine to obtain a plurality of corresponding query results in a database. The aggregation query requests are arranged corresponding to the query results.

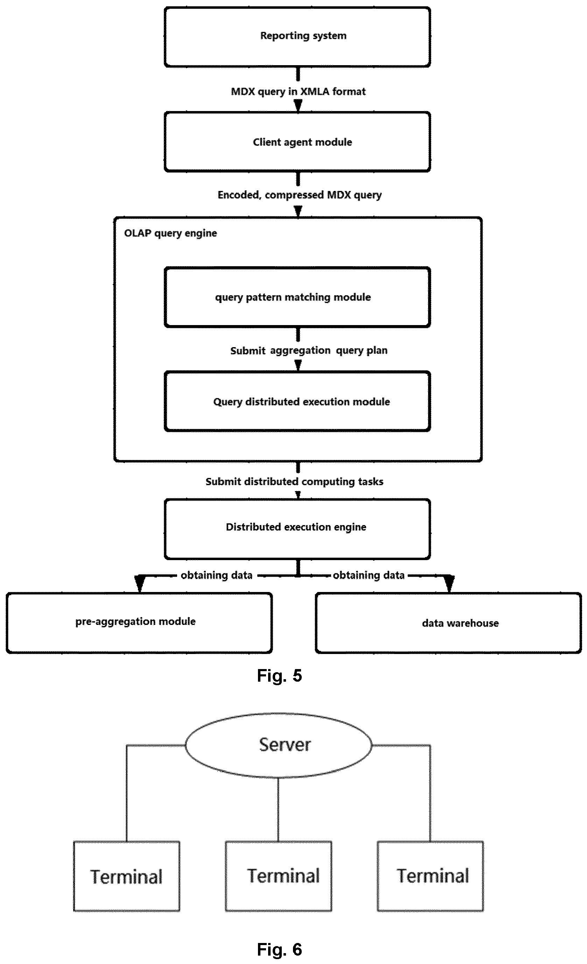

Further, as shown in Fig. 5, the device further includes a client agent module. The client agent module is configured to convert a format of the MDX query request into any one or more of a JSON format and a Protobuf format from an XMLA.

Further, the client agent module is configured to determine whether the value of the MDX query request is greater than a first preset value.

If the value of the MDX query request packet is greater than the first preset, the format of the MDX query request is converted into any one or more of the JSON format and the Protobuf format from an XMLA.

Further, the device further includes a pre-aggregation module. The pre-aggregation module is configured to obtain service demand data. The service demand data includes dimension information.

Original detail data involved in a data warehouse is constructed into Cube corresponding to the dimension information according to the dimension information.

An embodiment of the disclosure provides a query method suitable for an OLAP query engine is provided. The method is performed on a server side, and includes the following steps.

At A20, the server receives an MDX query request sent by a terminal, and processes the MDX query request to generate at least one set of aggregation query sets based on dimension. One set of aggregation query sets includes a plurality of aggregation query requests.

At A40, the server performs concurrent processing on the plurality of aggregation query requests based on the OLAP query engine to obtain a plurality of corresponding query results in a database. The aggregation query requests are arranged corresponding to the query results.

At A60, the server obtains service demand data. The service demand data includes dimension information. Original detail data involved in a data warehouse is constructed into Cube corresponding to the dimension information according to the dimension information. The original detail data is the detail of the query results.

The above method of the disclosure includes step A20 to step A60, and is performed on the server side. The MDX query request can be processed to generate at least one set of aggregation query sets based on dimension. Concurrent processing is performed to obtain corresponding query results in a query process of the OLAP query engine. In the process, since the OLAP query engine controlled by the method generates the aggregation query sets based on dimensions prior to query data of a reporting system, concurrent processing is adopted when the aggregation query sets are queried. Therefore, compared with a traditional manner, it has higher efficiency.

An embodiment of the disclosure provides a query method suitable for an OLAP query engine. The method is performed on a terminal side, and includes the following steps.

At B20, a terminal converts a format of the MDX query request into any one or more of a JSON format and a Protobuf format from an XMLA to send to a server.

At B40, the server receives an MDX query request sent by a terminal, and processes the MDX query request to generate at least one set of aggregation query sets based on dimension. One set of aggregation query sets includes a plurality of aggregation query requests.

At B60, the server performs concurrent processing on the plurality of aggregation query requests based on the OLAP query engine to obtain a plurality of corresponding query results in a database. The aggregation query requests are arranged corresponding to the query results.

The above method of the disclosure includes step B20 to B60, and is performed on the terminal side. Through B20, the data format of OLAP query is converted into a lighter and efficient data format (including but not limited to JSON, Protobuf, etc.) from the XMLA, and a compression algorithm is used to further reduce network data transmission volume. Then, the data format is interacted with the OLAP query engine. Finally, a data format of a result obtained from the OLAP query engine is converted into the XMLA, to return to a reporting system. Based on the above steps, network data transmission volume of an original reporting system and the OLAP query engine can be greatly reduced. Finally, through B40 and B60, corresponding processing is performed.

In an embodiment, the server is configured to obtain service demand data. The service demand data comprising dimension information.

Original detail data involved in a data warehouse is constructed into Cube corresponding to the dimension information according to the dimension information. The original detail data is the detail of the query results.

An embodiment of the disclosure provides a query device suitable for an OLAP query engine. The device includes a query pattern matching module, a query distributed execution module, and a pre-aggregation module.

The query pattern matching module is configured to obtain an MDX query request received by an OLAP query engine, and process the MDX query request to generate at least one set of aggregation query sets based on dimension. The one set of aggregation query sets includes a plurality of aggregation query requests.

The query distributed execution module is configured to perform concurrent processing on the plurality of aggregation query requests based on the OLAP query engine to obtain a plurality of corresponding query results in a database. The aggregation query requests are arranged corresponding to the query results.

The pre-aggregation module is configured to perform concurrent processing on the plurality of aggregation query requests based on the OLAP query engine to obtain a plurality of corresponding query results in a database. The aggregation query requests are arranged corresponding to the query results.

An embodiment of the disclosure provides a query device suitable for an OLAP query engine. The device includes the following operations.

A format of the MDX query request is converted into any one or more of a JSON format and a Protobuf format from an XMLA to send to a server.

The server receives an MDX query request sent by a terminal, and processes the MDX query request to generate at least one set of aggregation query sets based on dimension. One set of aggregation query sets includes a plurality of aggregation query requests.

The server performs concurrent processing on the plurality of aggregation query requests based on the OLAP query engine to obtain a plurality of corresponding query results in a database. The aggregation query requests are arranged corresponding to the query results.

An embodiment of the disclosure provides a query system suitable for an OLAP query engine. The system includes at least one terminal and at least one platform server.

The terminal is configured to convert a format of the MDX query request into any one or more of a JSON format and a Protobuf format from an XMLA to send to a server.

The platform server is configured to: receive an MDX query request sent by the terminal, and process the MDX query request to generate at least one set of aggregation query sets based on dimension, the one set of aggregation query sets including a plurality of aggregation query requests; perform concurrent processing on the plurality of aggregation query requests based on the OLAP query engine to obtain a plurality of corresponding query results in a database, the aggregation query requests being arranged corresponding to the query results; and obtain service demand data, the service demand data including dimension information, and construct original detail data involved in a data warehouse into Cube corresponding to the dimension information according to the dimension information, wherein the original detail data is the detail of the query results.

The terminal firstly processes the data, convers the data format of OLAP query into a lighter and efficient data format (including but not limited to JSON, Protobuf, etc.) from the XMLA, and further reduces network data transmission volume by using a compression algorithm. Then, the data format is interacted with the OLAP query engine. Finally, a data format of a result obtained from the OLAP query engine is converted into the XMLA, to return to a reporting system.

The server receives the MDX query request processed by the terminal, and can process the MDX query request to generate at least one set of aggregation query sets based on dimension. Concurrent processing is performed to obtain corresponding query results in a query process of the OLAP query engine. In the process, since the OLAP query engine controlled by the method generates the aggregation query sets based on dimensions prior to query data of a reporting system, concurrent processing is adopted when the aggregation query sets are queried. Therefore, compared with a traditional manner, it has higher efficiency.

A readable storage medium may be a computer storage medium, or may also be a communication medium. The communication medium includes any media transmitting a computer program from one place to another place. The computer storage medium may be any available media capable of being stored by a general or special computer. For example, the readable storage medium is coupled to a processor, so that the processor can read information from the readable storage medium and write the information to the readable storage medium. Definitely, the readable storage medium may also be a component of the processor. The processor and the readable storage medium may be located in application specific integrated circuits (ASICs). In addition, the ASIC may be located in user equipment. Definitely, the processor and the readable storage medium may also be discrete components in communication equipment. The readable storage medium may be read-only memory (ROM), a random access memory (RAM), CD-ROM, a tape, software, an optical data storage device, etc.

The disclosure further provides a program product. The program product includes an execution instruction. The execution instruction is stored in the readable storage medium. At least one processor of the equipment may read the execution instruction from the readable storage medium. The at least one processor performs the execution instruction to cause the equipment to implement the method provided by the above various implementations.

In embodiments of the above terminal or server, it should be understood that, the processor may be a central processing unit (CPU), or may also be other general processes, digital signal processors (DSPs), application specific integrated circuits (ASIC), and the like. The general processors may be microprocessors or the processor may also be any conventional processors. In combination with the method provided in the disclosure, the steps may be directly implemented by a hardware processor, or may be performed by a combination of hardware and software modules in the processor.

Finally, it should be noted that, the above embodiments are merely for describing and not intended to limit the technical solutions of the disclosure. Although the disclosure has been described in detail with reference to the above embodiments, those of ordinary skill in the art should understand that, they can still make modifications to the technical solutions recited in the above embodiments or make equivalent replacements to a part or all of the technical features thereof; and the modifications or replacements do not cause essence of the corresponding technical solutions to depart from the scope of the technical solutions of the embodiments of the disclosure.

## Claims

1. A query method suitable for an On-Line Analytical Processing (OLAP) query engine, comprising:
obtaining an MDX query request received by an OLAP query engine, and processing the MDX query request to generate at least one set of aggregation query requests based on dimension, one set of aggregation query sets comprising a plurality of aggregation query requests; and
performing concurrent processing on the plurality of aggregation query requests based on the OLAP query engine to obtain a plurality of corresponding aggregation query results in a database, the aggregation query requests being arranged corresponding to the aggregation query results.

2. The query method suitable for an OLAP query engine as claimed in claim 1, wherein
that obtaining the MDX query request received by the OLAP query engine comprises:
converting a format of the MDX query request into any one or more of a JSON format and a Protobuf format from an XMLA.

3. The query method suitable for an OLAP query engine as claimed in claim 2, wherein
before converting the format of the MDX query request into any one or more of the JSON format and the Protobuf format from an XMLA, further comprising:
determining whether an MDX query request packet is greater than a first preset value; and
if the MDX query request packet is greater than the first preset, converting the format of the MDX query request into any one or more of the JSON format and the Protobuf format from an XMLA.

4. The query method suitable for an OLAP query engine as claimed in claim 1, wherein
after performing concurrent processing on the plurality of aggregation query requests based on the OLAP query engine to obtain a plurality of corresponding aggregation query results in a database, further comprising:
feeding back the plurality of aggregation query results to the OLAP query engine and a reporting system.

5. The query method suitable for an OLAP query engine as claimed in claim 1, wherein
obtaining service demand data, the service demand data comprising dimension information; and
constructing original detail data involved in a data warehouse into Cube corresponding to the dimension information according to the dimension information.

6. A query device suitable for an OLAP query engine, comprising:
a query pattern matching module, configured to obtain an MDX query request received by an OLAP query engine, and process the MDX query request to generate at least one set of aggregation query sets based on dimension, the one set of aggregation query sets comprising a plurality of aggregation query requests;
a query distributed execution module, configured to perform concurrent processing on the plurality of aggregation query requests based on the OLAP query engine to obtain a plurality of corresponding query results in a database, the aggregation query requests being arranged corresponding to the query results.

7. The query device suitable for an OLAP query engine as claimed in claim 1, wherein
the device further comprises a client agent module, the client agent module is configured to convert a format of the MDX query request into any one or more of a JSON format and a Protobuf format from an XMLA.

8. The query device suitable for an OLAP query engine as claimed in claim 1, wherein
the client agent module is configured to determine whether the value of the MDX query request is greater than a first preset value; and
if the value of the MDX query request packet is greater than the first preset, converting the format of the MDX query request into any one or more of the JSON format and the Protobuf format from an XMLA.

9. The query method suitable for an OLAP query engine as claimed in claim 1, wherein
further comprising a pre-aggregation module, configured to obtain service demand data, the service demand data comprising dimension information; and
constructing original detail data involved in a data warehouse into Cube corresponding to the dimension information according to the dimension information.

10. A readable storage medium, wherein the readable storage medium stores a computer program, and the method as claimed in any of claims 1 to 5 is implemented when the computer program is performed by a processor.

11. A query method suitable for an OLAP query engine, wherein the method is performed on a server side, and comprises:
receiving, by a server, an MDX query request sent by a terminal, and processing the MDX query request to generate at least one set of aggregation query sets based on dimension, one set of aggregation query sets comprising a plurality of aggregation query requests;
performing, by the server, concurrent processing on the plurality of aggregation query requests based on the OLAP query engine to obtain a plurality of corresponding query results in a database, the aggregation query requests being arranged corresponding to the query results; and
obtaining, by the server, service demand data, the service demand data comprising dimension information, and constructing original detail data involved in a data warehouse into Cube corresponding to the dimension information according to the dimension information, and the original detail data is the detail of the query results.

12. A query method suitable for an OLAP query engine, wherein the method is performed on a terminal side, and comprises:
converting, by a terminal, a format of the MDX query request into any one or more of an JSON format and a Protobuf format from an XMLA to send to a server;
receiving, by a server, an MDX query request sent by a terminal, and processing the MDX query request to generate at least one set of aggregation query sets based on dimension, one set of aggregation query sets comprising a plurality of aggregation query requests; and
performing, by the server, concurrent processing on the plurality of aggregation query requests based on the OLAP query engine to obtain a plurality of corresponding query results in a database, the aggregation query requests being arranged corresponding to the query results.

13. The query method suitable for an OLAP query engine as claimed in claim 13, wherein
the server is configured to obtain service demand data, the service demand data comprising dimension information; and
constructing original detail data involved in a data warehouse into Cube corresponding to the dimension information according to the dimension information, the original detail data being the detail of the query results.

14. A query device suitable for an OLAP query engine, comprising:
a query pattern matching module, configured to obtain an MDX query request received by an OLAP query engine, and process the MDX query request to generate at least one set of aggregation query sets based on dimension, the one set of aggregation query sets comprising a plurality of aggregation query requests;
a query distributed execution module, configured to perform concurrent processing on the plurality of aggregation query requests based on the OLAP query engine to obtain a plurality of corresponding query results in a database, the aggregation query requests being arranged corresponding to the query results; and
a pre-aggregation module, configured to perform concurrent processing on the plurality of aggregation query requests based on the OLAP query engine to obtain a plurality of corresponding query results in a database, the aggregation query requests being arranged corresponding to the query results.

15. A query device suitable for an OLAP query engine, comprising the following operation(s):
converting a format of the MDX query request into any one or more of a JSON format and a Protobuf format from an XMLA to send to a server;
receiving, by a server, an MDX query request sent by a terminal, and processing the MDX query request to generate at least one set of aggregation query sets based on dimension, one set of aggregation query sets comprising a plurality of aggregation query requests; and
performing, by the server, concurrent processing on the plurality of aggregation query requests based on the OLAP query engine to obtain a plurality of corresponding query results in a database, the aggregation query requests being arranged corresponding to the query results.

16. A query system suitable for an OLAP query engine, wherein the system comprises at least one terminal and at least one platform server;
the terminal is configured to convert a format of the MDX query request into any one or more of an JSON format and a Protobuf format from an XMLA to send to a server; and
the platform server is configured to: receive an MDX query request sent by the terminal, and process the MDX query request to generate at least one set of aggregation query sets based on dimension, the one set of aggregation query sets comprising a plurality of aggregation query requests; perform concurrent processing on the plurality of aggregation query requests based on the OLAP query engine to obtain a plurality of corresponding query results in a database, the aggregation query requests being arranged corresponding to the query results; and obtain service demand data, the service demand data comprising dimension information, and construct original detail data involved in a data warehouse into Cube corresponding to the dimension information according to the dimension information, wherein the original detail data is the detail of the query results.

17. An electronic device, comprising at least one processor and a memorizer in communication connection with the at least one processor, wherein the memorizer stores a computer program capable of being performed by the at least one processor, and the computer program is performed by the at least one processor, to cause the at least one processor to perform the query method suitable for an On-Line Analytical Processing (OLAP) query engine as claimed in any of claims 1 to 5, 11 to 13.
